# EUROPÄISCHE PATENTSCHRIFT

(11) **EP 3 849 295 B1**
(45) Veröffentlichungstag und Bekanntmachung des Hinweises auf die Patenterteilung: **16.08.2023**
(21) Anmeldenummer: 19770006.5
(22) Anmeldetag: 11.09.2019
(51) Int. Cl.: A01B 45/02

(54) **BODENBEHANDLUNGSVORRICHTUNG**
SOIL TREATMENT APPARATUS
DISPOSITIF DE TRAITEMENT DU SOL

(30) Priorität: 11.09.2018 DE 102018122086
(43) Veröffentlichungstag der Anmeldung: 21.07.2021
(73) Patentinhaber: Novokraft AG, 4125 Riehen (CH)
(72) Erfinder: HARDMAN, Eric, 4125 Riehen (CH); JANSEN, Rob, 5571 Bergeijk (NL)
(74) Vertreter: DTS Patent- und Rechtsanwälte Schnekenbühl und Partner mbB
(86) Internationale Anmeldenummer: PCT/EP2019/074188
(87) Internationale Veröffentlichungsnummer: WO 2020/053252

(56) Entgegenhaltungen:
- WO-A1-2017/148792
- DE-A1-102015 115 991
- DE-A1-102016 105 248
- DE-A1-102016 105 253

## Beschreibung

Die Erfindung betrifft eine Bodenbehandlungsvorrichtung zur Bodenlockerung, insbesondere bei Böden mit Rasenbewuchs, umfassend eine Trageinrichtung und eine daran beweglich gehaltene Halteeinrichtung, an der eine Mehrzahl von Injektionselementen gehalten ist, eine Hubeinrichtung, über die die Injektionselemente in den Boden einführbar und aus diesem herausziehbar sind, und eine Fluidbereitstellungseinrichtung, die mindestens einen Vorratsbehälter für Fluid umfasst, der mit Fluid zum Zwischenspeichern beaufschlagbar ist und der mit mehreren Injektionselementen direkt oder indirekt in Fluidverbindung steht.

Eine derartige Bodenbehandlungsvorrichtung ist zum Beispiel in der DE 10 2016 105 248 A1 beschrieben und kommt zur Pflege des Bodens zum Einsatz, wobei beispielsweise nadelförmige Injektionselemente zum Injizieren des Fluids in den Boden dienen. Unter der Wirkung des Fluids, insbesondere ein Druckgas oder Druckgasgemisch, speziell Druckluft (in diesem Fall wird von Aerifizierung gesprochen), werden eine Lockerung und dadurch eine bessere Belüftung und Entwässerung des Bodens erzielt. Luft und Wasser können besser in den Boden eindringen, und die Drainagewirkung wird verbessert. Bei Böden mit Rasenbewuchs, beispielsweise von Sport- oder Freizeitanlagen, kann sich das Wurzelwerk besser im Erdreich ausbreiten, um das Wachstum zu fördern.

Weitere Bodenbehandlungsvorrichtungen zur Fluidinjektion und insbesondere zur Aerifizierung sind in der DE 10 2015 115 991 A1, in der DE 10 2016 105 253 A1 und in der WO 2017/148792 A1 beschrieben.

Beispielhafte Anwendungen der vorliegenden Erfindung finden sich bei einem Fußballfeld einschließlich dessen Randbereichen (Seiten- und Torausbereiche, Coachingzonen...), einem Footballfeld, einem Baseballfeld, einem Golfplatz, der sowohl das Green als auch das Fairway umfassen kann, oder einem Tennisplatz mit Rasenbewuchs. Beispiele für Freizeitanlagen sind Grünanlagen im öffentlichen Bereich, etwa Parkanlagen. Denkbar ist auch ein Einsatz der hier beschriebenen Bodenbehandlungsvorrichtung bei Pflanzungen, insbesondere im Obstbau oder Rebbau.

Die Bodenbehandlungsvorrichtung eignet sich vorteilhafterweise zur Fluidinjektion (Flüssigkeit und/oder Gas/Gasgemisch) und insbesondere zur Aerifizierung bei Böden mit Naturrasen und Hybridrasen.

Die Bodenbehandlungsvorrichtungen, die in den vorstehend genannten Druckschriften beschrieben sind, bewähren sich in der Praxis. Im Einsatz wird die Bodenbehandlungsvorrichtung beispielsweise mittels eines Zugfahrzeuges in einer Bearbeitungsrichtung bewegt. Über die Hubeinrichtung werden die an der Halteeinrichtung gehaltenen Injektionselemente in den Boden eingeführt und nach der Fluidinjektion wieder angehoben. In der Bearbeitungsrichtung nachgelagert kann eine walzenförmige Auflageeinrichtung an der Bodenbehandlungsvorrichtung angeordnet sein, die über die von der Fluidinjektion erfassten Abschnitte der Bodenfläche hinweg bewegt wird, wobei die Auflagekraft über die Auflageeinrichtung möglichst auf dem Boden verteilt wird.

Aufgabe der vorliegenden Erfindung ist es, eine Bodenbehandlungsvorrichtung der eingangs genannten Art bereitzustellen, die eine kompaktere Konstruktion aufweist.

Diese Aufgabe wird durch eine erfindungsgemäße Bodenbehandlungsvorrichtung mit den Merkmalen von Anspruch 1 gelöst.

Bei der erfindungsgemäßen Bodenbehandlungsvorrichtung kann vorgesehen sein, dass die Halteeinrichtung zum Haltern der Injektionselemente einen Rahmen umfasst. Alternativ oder ergänzend umfasst die Trageinrichtung einen Rahmen. Der Rahmen ist aus miteinander verbundenen Strukturelementen aufgebaut, und der mindestens eine Vorratsbehälter bildet ein Strukturelement des Rahmens aus. Anders formuliert kann mindestens ein Strukturelement des Rahmens einen Vorratsbehälter ausbilden, in dem Fluid zwischengespeichert werden kann. Zur Zwischenspeicherung des Fluids umfasst der mindestens eine Vorratsbehälter insbesondere einen Hohlkörper oder ist als solcher ausgebildet mit einem das Fluid aufnehmenden Fluidraum und einer den Fluidraum begrenzenden Wandung. Bei der erfindungsgemäßen Bodenbehandlungsvorrichtung kann eine Integration von Funktionen erzielt werden. Dies ermöglicht nicht nur eine einfachere und kostengünstigere Herstellung, sondern auch eine kompakte Bauform der Bodenbehandlungsvorrichtung. Platz für den mindestens einen Vorratsbehälter kann eingespart und dadurch die Vorrichtung kompakter gebaut werden.

Günstig ist es, dass der Vorratsbehälter zwei weitere, im Abstand zueinander angeordnete Strukturelemente des Rahmens miteinander verbindet und jeweilige Durchgangsöffnungen der weiteren Strukturelemente durchgreift. Auf diese Weise kann der Rahmen einfach und robust gefertigt werden. Beispielsweise wird das vorstehend erwähnte Hohlprofil durch Durchgangsöffnungen der weiteren Strukturelemente hindurchgeführt und endseitig mit dem vorstehend erwähnten Abdeckelement verschlossen.

Mit den Rändern der Durchgangsöffnungen ist der mindestens eine Vorratsbehälter vorteilhafterweise durch Verschweißung verbunden, wodurch eine besonders robuste Ausgestaltung des Rahmens erzielt werden kann. Andersartige Verbindungsmöglichkeiten sind ebenfalls denkbar.

Günstig ist es, wenn die Halteeinrichtung ein Koppelteil aufweist und ein Halteteil, wobei die Halteeinrichtung über das Koppelteil an der Trageinrichtung gehalten ist und die Injektionselemente am Halteteil gehalten sind, und wenn das Halteteil relativ zum Koppelteil über die Hubeinrichtung anhebbar und absenkbar ist.

Von Vorteil ist es, wenn das Koppelteil den Rahmen umfasst oder ausbildet. Alternativ oder ergänzend kann vorgesehen sein, dass das Halteteil den Rahmen umfasst oder ausbildet.

Günstigerweise umfasst die Bodenbehandlungsvorrichtung eine Verstelleinrichtung, über die das Koppelteil relativ zur Trageinrichtung längs einer Bearbeitungsrichtung der Bodenbehandlungsvorrichtung beweglich und insbesondere verschiebbar ist. Das Koppelteil kann dementsprechend auch Verschiebeteil genannt werden. Die Verstelleinrichtung, insbesondere eine Verschiebeeinrichtung, ermöglicht das Bewegen der Halteeinrichtung über dessen Koppelteil relativ zur Trageinrichtung. Dies erlaubt es insbesondere, eine quasi-kontinuierliche Arbeitsweise der Bodenbehandlungsvorrichtung sicherzustellen, wie sich zum Beispiel in der DE 10 2015 115 991 A1 und in der DE 10 2016 105 248 A1 beschrieben ist.

Bildet das Koppelteil den Rahmen aus, kann der Rahmen mit dem mindestens einen Vorratsbehälter mittels der Verstelleinrichtung relativ zur Trageinrichtung, die vorzugsweise ebenfalls einen Rahmen umfasst, bewegt und insbesondere verschoben werden.

Der Rahmen des Koppelteils umfasst vorteilhafterweise Strukturelemente, die Führungselemente für das relativ zum Koppelteil verschiebliche Halteteil ausbilden. Führungen für das absenkbare und anhebbare Halteteil können auf diese Weise den Rahmen versteifen.

Günstig ist es, wenn die Hubeinrichtung ein Bestandteil der Halteeinrichtung ist und/oder wenn die Hubeinrichtung als Verschiebeeinrichtung ausgestaltet ist.

Es versteht sich, dass die Verstelleinrichtung und die Hubeinrichtung vorteilhafterweise von einer Steuereinrichtung der Bodenbehandlungsvorrichtung ansteuerbar sind.

Bei einer Umsetzung der Bodenbehandlungsvorrichtung in der Praxis erweist es sich als vorteilhaft, wenn die Verstelleinrichtung und/oder die Hubeinrichtung hydraulisch ausgestaltet ist und wenn die Bodenbehandlungsvorrichtung einen Hydraulikmotor aufweist zum Bereitstellen von Hydraulikflüssigkeit für die Verstelleinrichtung und/oder die Hubeinrichtung.

Alternativ kann vorgesehen sein, dass die Verstelleinrichtung und/oder die Hubeinrichtung pneumatisch, mechanisch oder elektrisch ausgestaltet ist.

Von Vorteil ist es, wenn die Verstelleinrichtung mit dem mindestens einen Vorratsbehälter und der Trageinrichtung gekoppelt ist. Die Verstelleinrichtung kann direkt oder indirekt, beispielsweise über ein Verbindungselement, am mindestens einen Vorratsbehälter angreifen. Günstigerweise ist die Verstelleinrichtung bei Vorhandensein von zwei oder mehr Vorratsbehältern über ein Strukturelement des Rahmens mit zumindest zwei Vorratsbehältern gekoppelt.

Von Vorteil ist es, wenn die Hubeinrichtung mit dem mindestens einen Vorratsbehälter und der Halteteil gekoppelt ist. Die Hubeinrichtung kann direkt oder indirekt, beispielsweise über ein Verbindungselement, am mindestens einen Vorratsbehälter angreifen. Günstigerweise ist die Hubeinrichtung bei Vorhandensein von zwei oder mehr Vorratsbehältern über ein Strukturelement des Rahmens mit zumindest zwei Vorratsbehältern gekoppelt.

Es kann vorgesehen sein, dass die Halteeinrichtung, insbesondere das Halteteil, einen Haltekörper aufweist, an dem die Injektionselemente mittels Fixierelementen festgelegt sind. Die Injektionselemente durchgreifen beispielsweise Durchgangsöffnungen des Haltekörpers, wobei ein jeweiliges Injektionselement mit einem Fixierteil an einem Rand einer jeweiligen Durchgangsöffnung festgelegt ist.

Die Injektionselemente können vorzugsweise entgegen einer Rückstellkraft sie vom Haltekörper weg beaufschlagender Rückstellelemente relativ zum Haltekörper verschieblich sein. Die Fixierteile bilden vorzugsweise eine Führung für die Injektionselemente aus. Ein jeweiliger, einem Injektionselement zugeordneter Fluidbehälter ist vorzugsweise starr mit einem jeweiligen, einem Injektionselement zugeordneten Auslassventil und über dieses mit den Injektionselement verbunden. Der Fluidbehälter und das Auslassventil sind bevorzugt zusammen mit dem Injektionselement verschiebbar.

Bei einer bevorzugten Ausführungsform der Bodenbehandlungsvorrichtung ist der mindestens eine Vorratsbehälter längserstreckt ausgestaltet.

Als günstig erweist es sich bei einer vorteilhaften Ausführungsform, wenn der mindestens eine Vorratsbehälter in einer Querrichtung der Bodenbehandlungsvorrichtung und/oder horizontal ausgerichtet ist. Orientierungs- und Positionsangaben beziehen sich vorliegend auf einen bestimmungsgemäßen Gebrauch der Bodenbehandlungsvorrichtung, die insbesondere längs einer Bearbeitungsrichtung auf der Bodenfläche bewegt wird. Die Querrichtung ist quer und insbesondere senkrecht zur Bearbeitungsrichtung ausgerichtet. Es wird angenommen, dass die Bodenfläche horizontal ausgerichtet ist, und eine Kontaktebene der Bodenbehandlungsvorrichtung fällt mit der von der Bodenfläche definierten Ebene zusammen.

Von Vorteil ist es, wenn der mindestens eine Vorratsbehälter ein Hohlprofil ist oder umfasst, das günstigerweise längserstreckt ist. Dies ermöglicht eine konstruktiv einfache Ausgestaltung des Vorratsbehälters. Über das Hohlprofil kann dem Rahmen die erforderliche Steifheit verliehen werden. Ein Fluidraum des Hohlprofils kann Fluid, insbesondere Druckluft, für die Injektion zwischenspeichern.

Günstig ist es, wenn am Hohlprofil Abdeckelemente angeordnet sind oder dass das Hohlprofil Abdeckelemente umfasst, vorzugsweise endseitig an diesem, über welche Abdeckelemente das Hohlprofil verschlossen ist. Dies erlaubt eine einfache Fertigung des Vorratsbehälters. Das Profil kann zum Beispiel endseitige Öffnungen aufweisen, an denen die Abdeckelemente angeordnet und mit dem Hohlprofil zum Verschließen des Fluidraums und Bilden des Hohlkörpers verbunden werden. Die Verbindung erfolgt zum Beispiel durch Kraft-/Form- oder Stoffschluss, beispielsweise mittels Verschweißen oder Verschrauben.

Es kann vorgesehen sein, dass der Vorratsbehälter, insbesondere das Hohlprofil, einen runden und vorzugsweise kreisrunden Querschnitt aufweist.

Der mindestens eine Vorratsbehälter ist vorteilhafterweise aus Metall gefertigt.

Günstigerweise ist der mindestens eine Vorratsbehälter, insbesondere das Hohlprofil, einwandig ausgestaltet. Dabei weist der mindestens eine Vorratsbehälter bevorzugt die Form eines senkrechten Kreiszylinders auf.

Der mindestens eine Vorratsbehälter verbindet vorzugsweise Seitenteile des Rahmens miteinander, die bevorzugt plattenförmig oder im Wesentlichen plattenförmig ausgestaltet sind.

Von Vorteil ist es, wenn der Rahmen mindestens ein weiteres, parallel zum mindestens einen Vorratsbehälter ausgerichtetes, die Seitenteile verbindendes Strukturelement umfasst, wodurch dem Rahmen eine höhere Robustheit verliehen werden kann.

Günstigerweise ist ein weiterer Vorratsbehälter zum Zwischenspeichern von Fluid vorgesehen, der die Seitenteile miteinander verbindet.

Bei einer bevorzugten Ausführungsform der Bodenbehandlungsvorrichtung umfasst oder bildet der Rahmen Auflageelemente zum Aufliegen insbesondere auf der Trageinrichtung, wobei die Auflageelemente eine Auflageebene definieren und der mindestens eine Vorratsbehälter oberhalb der Auflageebene angeordnet ist. Auf diese Weise kann vom Benutzer einfach auf den Vorratsbehälter von oben zugegriffen werden. Dies erweist sich zum Beispiel dann als vorteilhaft, wenn Anschlusselemente für Fluidleitungen obenseitig am Vorratsbehälter angeordnet sind.

Die Auflageelemente sind günstigerweise Rollen des relativ zur Trageinrichtung verschieblichen Koppelteils, die in Führungselemente der Trageinrichtung eingreifen. Die Halteeinrichtung, insbesondere das Koppelteil, kann vorzugsweise horizontal relativ zur Trageinrichtung verschoben werden. Die vorstehend genannte Auflageebene ist vorteilhafterweise horizontal ausgerichtet. Die Führungselemente der Trageinrichtung werden zum Beispiel durch Strukturelemente eines Rahmens der Trageinrichtung gebildet.

Von Vorteil ist es, wenn die Fluidbereitstellungseinrichtung zwei oder mehr Vorratsbehälter umfasst, die jeweils ein Strukturelement des Rahmens ausbilden. Dies erweist sich als günstig für rasche Arbeitszyklen der Bodenbehandlungsvorrichtung. Durch Nutzung von zwei oder mehr Vorratsbehältern zum Zwischenspeichern von Fluid kann das Intervall zwischen aufeinanderfolgenden Injektionen vorzugsweise verringert werden.

Vorzugsweise ist ein jeweiliger Vorratsbehälter mit derselben Anzahl von Injektionselementen fluidverbunden.

Günstigerweise sind die Vorratsbehälter identisch ausgestaltet.

Von Vorteil ist es, wenn die Fluidbereitstellungseinrichtung ein antreibbares Förderaggregat für Fluid umfasst, insbesondere einen Druckluftkompressor, das über mindestens eine Zufuhrleitung mit einem Fluideinlass des mindestens einen Vorratsbehälters fluidverbunden ist.

Bei Vorhandensein von zwei oder mehr Vorratsbehältern ist vorteilhafterweise vorgesehen, dass diese über die mindestens eine Zufuhrleitung parallel an das Förderaggregat angeschlossen sind. Alternativ kann vorgesehen sein, dass zwei oder mehr Vorratsbehälter über unterschiedliche Zufuhrleitungen an das Förderaggregat angeschlossen sind.

Günstigerweise ist mindestens ein Ventil in die mindestens eine Zufuhrleitung geschaltet, um diese wahlweise freizugeben und zu sperren. Das Ventil kann von der Steuereinrichtung ansteuerbar sein. Alternativ oder ergänzend kann ein Rückschlagventil vorgesehen sein, das eine Strömung von Fluid vom Förderaggregat zum mindestens einen Vorratsbehälter ermöglicht und eine Rückströmung sperrt. Denkbar ist alternativ eine ventillose Verbindung über die Zufuhrleitung.

Es erweist sich als vorteilhaft, wenn der mindestens eine Vorratsbehälter zwei oder mehr Fluideinlässe aufweist, an die jeweils eine Zufuhrleitung angeschlossen ist. Dies schließt vorliegend den Fall mit ein, dass eine Zufuhrleitung in zwei oder mehr Abschnitte verzweigt, die an einen jeweiligen Fluideinlass angeschlossen sind. Dies erlaubt es vorzugsweise, den Vorratsbehälter zügiger zu befüllen. Intervalle zwischen Injektionen von Fluid können dadurch verringert werden.

Günstig ist es, wenn Fluidauslässe des mindestens einen Vorratsbehälters, an die Fluidleitungen zur Fluidverbindung mit den Injektionselementen angeschlossen sind, zwischen den Fluideinlässen angeordnet sind, oder wenn zwischen den Fluideinlässen kein Fluidauslass angeordnet ist und jeweils die Hälfte der Fluidauslässe einem Fluideinlass zugeordnet ist und an der dem jeweils anderen Fluideinlass abgewandten Seite des Fluideinlasses angeordnet ist. Dies bietet den Vorteil, dass sich im Vorratsbehälter eine Strömung ausbilden kann, über die Fluid möglichst rasch vom Fluideinlass in Richtung der Fluidauslässe strömt und den Vorratsbehälter rasch befüllt. Beispielsweise strömt Fluid von den außenseitig angeordneten Fluideinlässen zu den zwischen diesen positionierten Fluidauslässen. Alternativ strömt Fluid von den mittig angeordneten Fluideinlässen zu den jeweils außenseitig zur Hälfte angeordneten Fluidauslässen.

Insgesamt ist es von Vorteil, wenn bei n Fluideinlässen (n ganzzahlig) einem jeweiligen Fluideinlass ein n-ter Anteil der Fluidauslässe nächstliegend angeordnet ist. Dies erweist sich bevorzugt als vorteilhaft für die Verteilung des Fluids auf die mehreren Fluidauslässe im Hinblick auf eine gleichmäßige Beaufschlagung der Injektionselemente und kleine Injektionsintervalle.

Als vorteilhaft erweist es sich, wenn der mindestens eine Fluideinlass und Fluidauslässe äquidistant zueinander am mindestens einen Vorratsbehälter angeordnet sind.

Günstig ist es, wenn der mindestens eine Fluideinlass und Fluidauslässe obenseitig am mindestens einen Vorratsbehälter angeordnet sind. Dies erleichtert dem Benutzer den Zugriff auf den Fluideinlass und die Fluidauslässe, beispielsweise zum Anschließen und/oder Trennen der mindestens einen Zufuhrleitung und der nachfolgend erwähnten Fluidleitungen.

Von Vorteil ist es, wenn Fluidleitungen zum Verbinden des mindestens einen Vorratsbehälters mit den Injektionselementen gleich lang oder im Wesentlichen gleich lang sind. Dies ist vorteilhaft für die Ausbildung gleichartiger Fluidströmungen vom Vorratsbehälter zu den Injektionselementen im Hinblick auf eine gleichmäßige Fluidinjektion.

In die Fluidleitungen kann jeweils ein bevorzugt von der Steuereinrichtung ansteuerbares Ventil geschaltet sein. Alternativ oder ergänzend kann ein Rückschlagventil vorgesehen sein, das eine Strömung von Fluid vom mindestens einen Vorratsbehälter in den jeweiligen Fluidbehälter ermöglicht und eine Rückströmung sperrt. Denkbar ist alternativ eine ventillose Verbindung über die Fluidleitungen.

Günstig ist ein Verhältnis einer Länge zu einem Durchmesser des mindestens einen Vorratsbehälters von ungefähr 10:1 bis 30:1, bevorzugt ungefähr 15:1 bis 25:1.

Von Vorteil ist ein Volumen des mindestens einen Vorratsbehälters von ungefähr 5 I bis 15 I bei einer bevorzugten Ausführungsform, vorzugsweise ungefähr 8 I bis 12 I.

Günstig ist es, wenn den Injektionselementen jeweilige Fluidbehälter zugeordnet sind und über ein jeweiliges, von einer Steuereinrichtung der Bodenbehandlungsvorrichtung ansteuerbares Auslassventil wahlweise mit diesen in Strömungsverbindung bringbar sind, wobei der mindestens eine Vorratsbehälter über Fluidleitungen mit den Fluidbehältern strömungsverbunden ist. Das zwischengespeicherte Fluid strömt vorzugsweise über die Fluidleitungen in die Fluidbehälter und wird darin zwischengespeichert. Durch Ansteuern des Auslassventils wird die Strömungsverbindung zum Injektionselement freigegeben, woraufhin das Fluid in den Boden injiziert werden kann.

Ein Verhältnis eines Volumenanteils des gleichmäßig auf die Anzahl der Injektionselemente verteilten Volumens des mindestens einen Vorratsbehälters zum Volumen des Fluidbehälters beträgt bei einer bevorzugten Ausführungsform ungefähr 1 bis 4, vorzugsweise ungefähr 2 bis 3.

Ein jeweiliger Fluidbehälter ist günstigerweise in geradliniger Richtung mit einer Düse am Ausgang des jeweiligen Injektionselementes verbunden.

Ein jeweiliges Auslassventil weist bevorzugt ein Ventilgehäuse auf, an dessen Eingangsseite der jeweilige Fluidbehälter angeschlossen ist, wobei das jeweilige Injektionselement an eine Ausgangsseite des Ventilgehäuses angeschlossen ist. Günstigerweise sind der Fluidbehälter, das Auslassventil und das Injektionselement starr miteinander verbunden.

Die Bodenbehandlungsvorrichtung weist günstigerweise vormontierte Injektionseinheiten auf, die jeweils einen Fluidbehälter, ein Auslassventil und ein Injektionselement umfassen oder durch diese gebildet sind, wobei die Injektionseinheiten bevorzugt mit der Halteeinrichtung lösbar verbindbar sind. Das vorstehend erwähnte Fixierteil ist bevorzugt ebenfalls Bestandteil der Injektionseinheit.

Günstig ist es, wenn die Injektionselemente austauschbar sind. Beispielsweise sind die Injektionselemente lanzenförmig ausgestaltet und umfassen zwei lösbar miteinander verbundene Abschnitte. Die Abschnitte sind zum Beispiel durch Verschraubung miteinander verbunden und günstigerweise ohne Demontage der Bodenbehandlungsvorrichtung zugänglich, insbesondere von einer Unterseite. Zum Austausch des unteren Abschnittes der Injektionselemente, zum Beispiel für Wartungszwecke und/oder zur Anpassung an den zu bearbeitenden Boden, können diese vom jeweils oberen Abschnitt gelöst werden.

Eine Ausgestaltung einer Bodenbehandlungsvorrichtung der vorstehend genannten Art, bei der Abschnitte der Injektionselemente lösbar miteinander verbindbar sind, stellt eine weitere mögliche Ausführungsform dar.

Die nachfolgende Beschreibung einer bevorzugten Ausführungsform der Erfindung dient im Zusammenhang mit der Zeichnung der näheren Erläuterung der Erfindung. Es zeigen:
- Figur 1:: eine perspektivische Darstellung einer erfindungsgemäßen Bodenbehandlungsvorrichtung unter Ausblendung einer Seitenwand und weiteren Teilen einer Verkleidung;
- Figur 2:: eine perspektivische Darstellung einer Halteeinrichtung der Bodenbehandlungsvorrichtung aus Figur 1, wobei Injektionselemente an der Halteeinrichtung gehalten sind und diese ein Koppelteil und ein Halteteil umfasst;
- Figur 3:: eine perspektivische Darstellung des Koppelteils der Halteeinrichtung aus Figur 2;
- Figur 4:: eine perspektivische Darstellung einer Injektionseinheit der Bodenbehandlungsvorrichtung aus Figur 1; und
- Figur 5:: die Injektionseinheit aus Figur 4, teilweise aufgeschnitten und in Explosionsdarstellung.

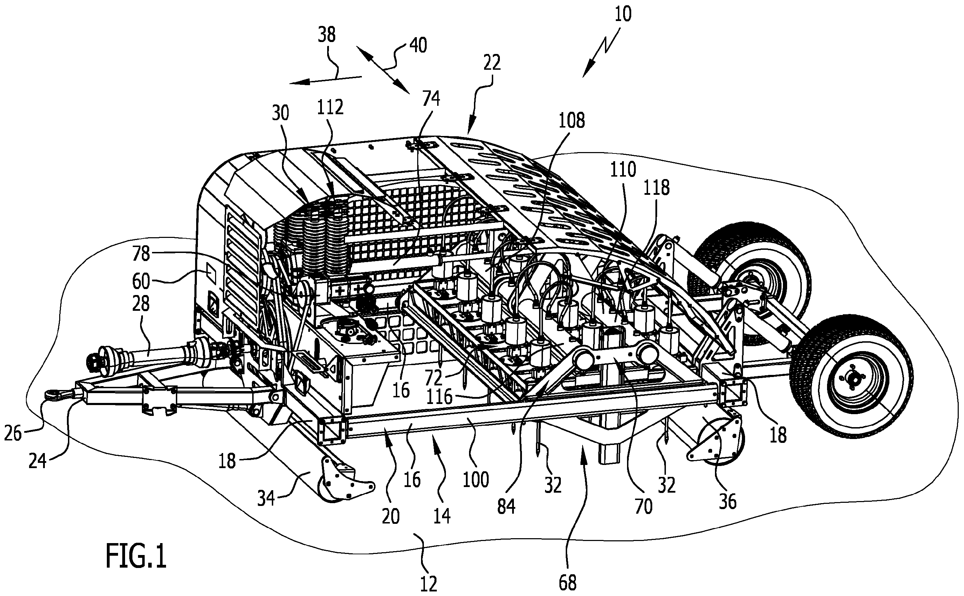

Figur 1 zeigt eine perspektivische Darstellung einer mit dem Bezugszeichen 10 belegten vorteilhaften Ausführungsform einer erfindungsgemäßen Bodenbehandlungsvorrichtung, nachfolgend zur Vereinfachung als Vorrichtung 10 bezeichnet.

Ferner ist ein von der Vorrichtung 10 zu behandelnder Boden 12 in Figur 1 schematisch dargestellt. Zum Boden 12 gehört insbesondere Erdreich und eine obenseitige Bodenfläche. Der Boden 12 kann beispielsweise einen Rasenbewuchs aufweisen, wenn es sich bei dem Boden 12 um den Boden einer Sport- oder Freizeitanlage handelt, insbesondere eines Fußballfeldes oder einer Golfbahn. Der Rasenbewuchs kann ein Rollrasen sein oder ein Naturrasen, jedoch ist auch ein Einsatz der Vorrichtung 10 mit Hybridrasen denkbar.

Zur Pflege des Bodens 12 und zur Förderung des Rasenbewuchses ist die Vorrichtung 10 vorgesehen, mit der eine vorteilhafte Bodenlockerung, eine verbesserte Bodenbelüftung, Entwässerung und Drainagewirkung erzielt werden kann. Dadurch kann sich das Wurzelwerk des Rasenbewuchses zur Förderung des Wachstums besser im Boden ausbreiten.

Es wird darauf hingewiesen, dass die vorliegende Erfindung nicht auf die Anwendung an einem Boden der beschriebenen Art beschränkt ist, dies dient nur der besseren Erläuterung der Erfindung.

Die Vorrichtung 10 umfasst eine Trageinrichtung 14, die einen aus Längsträgern 16 und Querträgern 18 gebildeten Tragrahmen 20 umfasst. An der Trageinrichtung 14 kann eine Verkleidung 22 gehalten sein, die gehäuseartig ausgestaltet sein kann. In Figur 1 ist eine linke Seitenwand der Verkleidung ausgeblendet, ebenso ein Teil einer Deckenwand und ein Teil einer Frontwand der Verkleidung 22.

An einer Vorderseite 24 ist an der Trageinrichtung 14 eine Kupplungseinrichtung 26 angeordnet, über die die Vorrichtung 10 an ein in der Zeichnung nicht dargestelltes Zugfahrzeug angekuppelt werden kann. Eine Antriebswelle 28 kann mit einer Zapfwelle des Zugfahrzeugs koppeln, um Arbeitsaggregate der Vorrichtung 10 anzutreiben.

Alternativ oder ergänzend kann vorgesehen sein, dass die Vorrichtung 10 selbstfahrend ausgestaltet ist und/oder dass eigenständige Antriebseinrichtungen für die Arbeitsaggregate vorgesehen sind.

Die Vorrichtung 10 dient zur Injektion eines Fluids, vorliegend insbesondere Druckluft, in den Boden 12. Zu diesem Zweck umfasst die Vorrichtung 10 eine Fluidbereitstellungseinrichtung 30, deren Aufbau nachfolgend noch erläutert wird, sowie lanzenförmig ausgestaltete Injektionselemente 32, die mit dem Fluid beaufschlagt werden können. Als Fluid kommt vorliegend insbesondere Druckluft zum Einsatz. Die Druckluft wird, wenn die Injektionselemente 32 relativ zur Trageinrichtung 14 eine abgesenkte Stellung einnehmen, in den Boden 12 injiziert.

An der Trageinrichtung 14 sind den Injektionselementen 32 vorgelagert bzw. nachgelagert walzenförmige Auflageeinrichtungen 34 bzw. 36 gehalten.

"Vorgelagert" bzw. "nachgelagert" bezieht sich vorliegend auf einen bestimmungsgemäßen Gebrauch der Vorrichtung 10, die in einer Bearbeitungsrichtung 38 bewegt wird. Abschnitte der Bodenfläche werden zunächst von der vorne angeordneten Auflageeinrichtung 34 überfahren. Anschließend wird Druckluft über die Injektionselemente 32 in den Boden 12 injiziert, wodurch dieser gelockert wird. Anschließend wird der gelockerte Bodenabschnitt mit der nachlaufenden Auflageeinrichtung 36 überfahren. Im bestimmungsgemä-ßen Gebrauch liegt die Vorrichtung 10 lediglich über die Auflageeinrichtungen 34 und 36 auf.

Quer und insbesondere senkrecht zur Bearbeitungsrichtung 38 ist eine Querrichtung 40 der Vorrichtung 10 ausgerichtet.

Vorliegend sind 14 Injektionselemente 32 vorgesehen, wobei deren Anzahl unterschiedlich ausfallen könnte. Längs der Bearbeitungsrichtung 38 sind drei Reihen von Injektionselementen 32 vorgesehen, wobei diese in jeder Reihe in der Querrichtung 40 nebeneinander ausgerichtet sind. Eine vordere und eine hintere Reihe umfassen jeweils fünf Injektionselemente 32 und eine mittlere Reihe vier Injektionselemente 32.

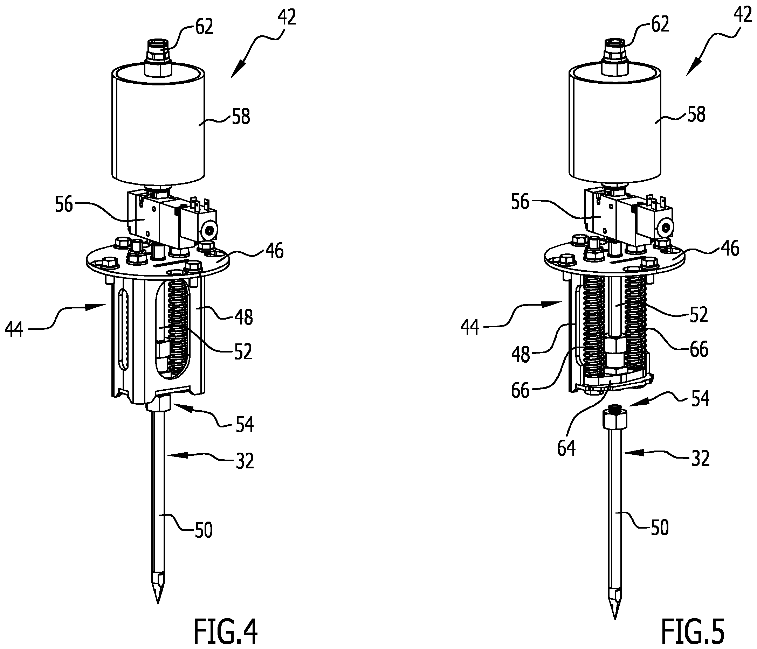

Im vorliegenden Fall umfasst die Vorrichtung 10 in den Figuren 4 und 5 dargestellte Injektionseinheiten 42, die vorzugsweise vormontiert sind. Die Injektionseinheiten 42 sind identisch ausgestaltet.

Jede Injektionseinheit 42 umfasst ein Fixierteil 44 mit einem flanschartigen Anlageelement 46 und einem einen Hohlkörper bildenden Gehäuse 48, der mit dem Anlageelement 46 verbunden ist. Die Injektionselemente 32 weisen jeweils einen ersten, unteren Abschnitt 50 auf und einen zweiten, oberen Abschnitt 52. "Unten" und "oben" beziehen sich auf einen bestimmungsgemäßen Gebrauch der Vorrichtung 10, wobei die Injektionselemente 32 mit der Unterseite, d. h. mit dem ersten Abschnitt 50 ganz oder teilweise in den Boden 12 eingeführt werden.

Der untere Abschnitt 50 ist mit dem oberen Abschnitt 52 lösbar verbunden, vorliegend durch eine Verschraubung 54, wobei andersartige Verbindungen denkbar sind. Dies gibt die Möglichkeit, die Injektionselemente 32 teilweise auszutauschen, beispielsweise zur Wartung und/oder im Hinblick auf die Beschaffenheit des Bodens 12. Von Vorteil ist es, dass der Austausch der unteren Abschnitte 50 ohne Demontage der Vorrichtung 10 möglich ist. Von der Unterseite kann die Verschraubung 54 gelöst und dadurch der untere Abschnitt 50 vom oberen Abschnitt 52 entfernt werden. Umgekehrt kann die Verschraubung von der Unterseite der Vorrichtung 10 vorgenommen werden.

Günstigerweise folgt eine fluiddichte Verbindung der Abschnitte 50, 52, wobei sich im vorliegenden Fall ein gesondertes Dichtelement oder eine Verschraubung mittels dichtendem Schneidring als vorteilhaft erweist.

Im Rahmen der vorliegenden Offenbarung wird eine eigenständige Erfindung insbesondere dadurch begründet, dass die Injektionselemente 32 teilweise entfernt werden können, ohne Demontage der Vorrichtung 10.

Die Injektionselemente 32 durchgreifen das Gehäuse 48 und sind oberhalb des Anlageelementes 46 mit einem Auslassventil 56 fluidverbunden, an dessen Einlassseite ein Fluidbehälter 58 angeschlossen ist. Das Auslassventil 56 kann mittels einer Steuereinrichtung 60 wahlweise geöffnet und geschlossen werden, um die Fluidverbindung vom Fluidbehälter 58 zur endseitig am Injektionselement 32 angeordneten Düse freizugeben bzw. zu sperren, wobei das Auslassventil 56 zur Druckluftinjektion freigegeben ist.

Der Fluidbehälter 58 umfasst einen Fluideinlass 62 vorliegend beträgt das Volumen des Fluidbehälters 58 ungefähr 0,5 I.

Im Gehäuse 48 ist am Injektionselement 32 ein Stützelement 64 festgelegt. Das Stützelement 64 stützt sich über mindestens ein und vorliegend zwei elastische Elemente 66, im vorliegenden Fall in Gestalt von Schraubenfedern, am Anlageelement 46 ab. Trifft das Injektionselement 32 beim Einführen in den Boden 12 auf ein Hindernis, kann eine Verschiebung entgegen der Rückstellkräfte der elastischen Elemente 66 erfolgen, wobei ebenfalls das mit dem Injektionselement 32 in starrer Verbindung stehende Auslassventil 56 sowie der daran gehaltene Fluidbehälter 58 verschoben werden.

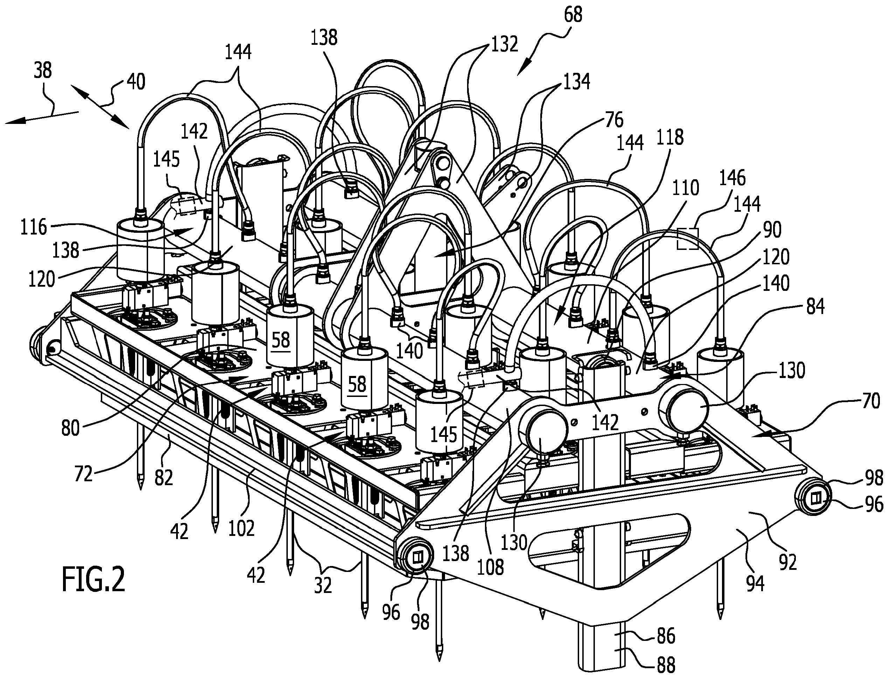

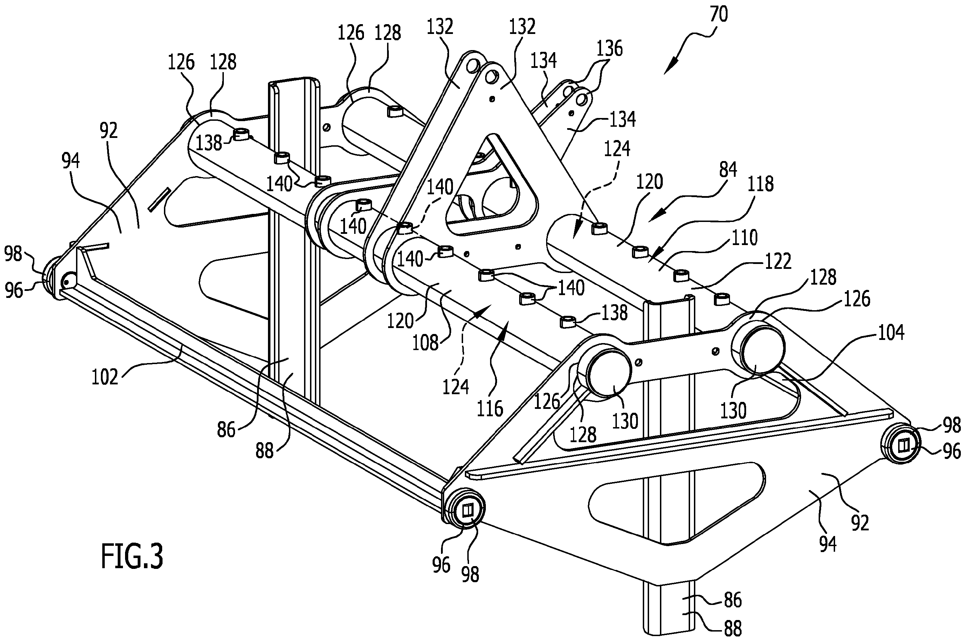

Die Injektionseinheiten 42 sind an der Trageinrichtung 14 mittelbar gehalten. Zu diesem Zweck umfasst die Vorrichtung 10 eine Halteeinrichtung 68. Die Halteeinrichtung 68 weist ein in Figur 3 perspektivisch dargestelltes Koppelteil 70 auf und ein an diesem anhebbar und absenkbar gehaltenes Halteteil 72 (Figur 2).

Eine Verstelleinrichtung 74, vorliegend umfassend ein Kolben-Zylinder-Aggregat, ist vorgesehen, um das Koppelteil 70 (zusammen mit dem Halteteil 72 und den daran gehaltenen Injektionselementen 32) relativ zur Trageinrichtung 14 zu verschieben. Das Koppelteil 70 kann daher auch als Verschiebeteil bezeichnet werden.

Des Weiteren ist eine Hubeinrichtung 76 vorgesehen, umfassend ein Kolben-Zylinder-Aggregat, um das Halteteil 72 und damit die Injektionselemente 32 relativ zum Koppelteil 70 abzusenken bzw. anzuheben und dementsprechend in den Boden 12 einzuführen bzw. aus diesem herauszuziehen.

Die Verstelleinrichtung 74 und die Hubeinrichtung 76 sind vorliegend hydraulisch ausgestaltet und werden von einem Hydraulikmotor 78, der mittels der Antriebswelle 28 angetrieben werden kann, mit Hydrauliköl beaufschlagt.

Die Halteeinrichtung 68 kann insbesondere in der Bearbeitungsrichtung 38 und dieser entgegengesetzt verschoben werden. Das Halteteil 72 wird quer und insbesondere senkrecht dazu abgesenkt bzw. angehoben werden. Dies gibt die Möglichkeit einer quasi-kontinuierlichen Bearbeitung des Bodens 12, wie sie zum Beispiel in der DE 10 2015 115 991 A1 und der DE 10 2016 105 248 A1 beschrieben ist, auf die diesbezüglich verwiesen wird.

Das Halteteil 72 umfasst einen im vorliegenden Fall im Wesentlichen plattenförmigen Haltekörper 80 (Figur 2). Die Injektionseinheiten 42 liegen über die Anlageelemente 46 am Haltekörper 80 an und sind beispielsweise mit diesem über eine Verschraubung verbunden. Die Injektionselemente 32 durchgreifen den Haltekörper 80 und einen Auflagekörper 82. Der Auflagekörper 82 ist mit dem Haltekörper 80 verbunden und liegt bei abgesenktem Halteteil 72 auf dem Boden 12 auf.

Das Koppelteil 70 ist vorliegend als Rahmen 84 aus miteinander verbundenen Strukturelementen ausgestaltet. Der Rahmen 84 ist bevorzugt aus Metall gefertigt.

Der Rahmen 84 umfasst zwei in der Querrichtung 40 im Abstand zueinander angeordnete Strukturelemente 86. Die Strukturelemente 86 sind Führungselemente 88, ausgestaltet durch Profile. Die Führungselemente 88 dienen zum Führen des Halteteils 72 beim Anheben und Absenken relativ zum Koppelteil 70, das beispielsweise mittels Rollen 90 in die Führungselemente 88 eingreift.

Der Rahmen 84 umfasst ferner die Strukturelemente 86 haltende Strukturelemente 92, die in der Querrichtung 40 voneinander beabstandet sind. Die Strukturelemente 92 bilden Seitenteile 94 des Rahmens 84. Die Seitenteile 94 sind vorliegend ungefähr plattenförmig ausgestaltet.

An den Seitenteilen 94 sind Auflageelemente 96 gehalten, ausgestaltet als Rollen 98. Die Rollen 98 liegen auf in von den Längsträgern 16 gebildeten Führungselementen 100 auf. Auf diese Weise wird das Koppelteil 70 und damit die Halteeinrichtung 68 relativ zur Trageinrichtung 14 beim Verschieben längs der Bearbeitungsrichtung 38 geführt.

Im vorliegenden Fall definieren die Rollen 98 eine Auflageebene, die unter der Annahme einer horizontalen Bodenfläche horizontal ausgerichtet ist (im vorliegenden Fall parallel zu der von den Auflageeinrichtungen 34, 36 definierten Ebene).

Die Seitenteile 94 sind miteinander durch weitere Strukturelemente 92 des Rahmens 84 verbunden. Längs der Bearbeitungsrichtung 38 vorne ist ein Strukturelement 104 vorgesehen, an einer Vorderseite des Rahmens 84. Ein korrespondierendes Strukturelement 106 ist längs der Bearbeitungsrichtung 38 hinten, an einer Rückseite des Rahmens 84, vorgesehen. Die Strukturelemente 104, 106 sind als winkelförmige Profile ausgestaltet.

Darüber hinaus umfasst der Rahmen 84 zwei weitere Strukturelemente 108 und 110. Die Strukturelemente 108, 110 sind oberhalb der von den Rollen 98 definierten Auflageebene angeordnet und insbesondere obenseitig am Rahmen 84.

Die Fluidbereitstellungseinrichtung 30 umfasst zum Bereitstellen des Fluids und insbesondere der Druckluft ein Förderaggregat in Gestalt eines Druckluftkompressors 112, der über die Antriebswelle 28 angetrieben werden kann. Der Druckluftkompressor 112 fördert Druckluft und beaufschlagt damit zwei Vorratsbehälter 116 und 118 der Fluidbereitstellungseinrichtung 30.

Günstig ist es im vorliegenden Fall, dass die Vorratsbehälter 116, 118 die Strukturelemente 108 bzw. 110 des Rahmens 84 ausbilden. In umgekehrter Betrachtungsweise werden die Vorratsbehälter 116, 118 durch die Strukturelemente 108 bzw. 110 des Rahmens 84 ausgebildet.

Dies ermöglicht eine kompakte Bauform und konstruktiv einfache Herstellung der Vorrichtung 10, bei der eine funktionelle Integration zwischen den Vorratsbehältern 116, 118 und dem Rahmen 84 besteht. Zugleich wird eine robuste Konstruktion des Rahmens 84 und damit der Halteeinrichtung 68 ermöglicht.

Die Vorratsbehälter 116, 118 sind im vorliegenden Beispiel identisch ausgestaltet, weswegen nachfolgend nur auf den Vorratsbehälter 116 eingegangen wird. Die diesbezüglichen Erläuterungen gelten auch für den anderen Vorratsbehälter 118. In der Bearbeitungsrichtung 38 ist der Vorratsbehälter 116 vor dem Vorratsbehälter 118 angeordnet.

Der Vorratsbehälter 116 ist vorliegend mittels eines Hohlprofils 120 gebildet, das eine Wand 122 aufweist und einen Fluidraum 124 einschließt. Das Hohlprofil 120 ist durch Durchgangsöffnungen 126 der Seitenteile 94 hindurchgeführt und mit dem jeweiligen Rand 128 der Durchgangsöffnung 126 verbunden, insbesondere durch Verschweißung.

Endseitig angeordnete Öffnungen des Hohlprofils 120 sind mittels eines jeweiligen Abdeckelementes 130 verschlossen, das zum Beispiel durch Verschwei-ßung am Hohlprofil 120 angebracht ist. Dadurch ist der Fluidraum 124 geschlossen. Der Vorratsbehälter 116 wird durch den entstehenden Hohlkörper mit dem Fluidraum 124 und der Wandung gebildet, die die Wand 122 und die von den Abdeckelementen 130 gebildeten Wände umfasst.

Die vorstehend beschriebene Konfiguration erlaubt eine einfache und kostengünstige Herstellung des Rahmens 84. Die zunächst offenen Hohlprofile 120 werden durch die Durchgangsöffnungen 126 hindurchgeführt, verschweißt und mittels der Abdeckelemente 130 verschlossen.

Der Vorratsbehälter 116 ist in Querrichtung 40 ausgerichtet und insbesondere parallel zu den Strukturelementen 104, 106 und zum Vorratsbehälter 118. Der Vorratsbehälter 116 weist eine Längserstreckung auf. Beispielsweise beträgt das Verhältnis von Länge zu Durchmesser des Vorratsbehälters 116 ungefähr 15:1 bis 25:1, beispielsweise ungefähr 20:1.

Der Vorratsbehälter 116 weist einen runden und insbesondere kreisrunden Querschnitt auf und ist insbesondere als senkrechter Kreiszylinder ausgestaltet.

Ein Volumen des Vorratsbehälters 116 beträgt vorzugsweise ungefähr 8 I bis 9 I bei der konkreten Umsetzung der Vorrichtung 10. Von den vorliegend 14 Injektionselementen 32 sind sieben Injektionselemente 32 mit dem Vorratsbehälter 116 fluidverbunden, die übrigen sieben Injektionselemente 32 mit dem Vorratsbehälter 118.

Günstig ist es, wenn ein Verhältnis eines Volumenanteils des gleichmäßig auf die Anzahl der Injektionselemente 32 (sieben Stück) verteilten Volumens des Vorratsbehälters 116 zum Volumen eines jeweiligen Fluidbehälters 58 ungefähr 1 bis 4 beträgt, vorliegend beträgt das Verhältnis ungefähr 2,5.

Der Rahmen 84 umfasst ferner ein Paar identisch ausgestalteter Strukturelemente 132, über die die Hubeinrichtung 76 mit den Vorratsbehältern 116, 118 koppelt. Die Strukturelemente 132 sind in der Querrichtung 40 im Abstand zueinander angeordnet und nehmen zwischen sich das Kolben-Zylinder-Aggregat der Hubeinrichtung 76 auf (Figur 2). Dabei sind die Strukturelemente 132 in Draufsicht vorliegend dreieckförmig, wobei zwei Ecken des "Dreiecks" an den Positionen der Vorratsbehälter 116, 118 liegen und ein drittes Eck des "Dreiecks" am Angriffspunkt des Kolben-Zylinder-Aggregates (Figur 2).

Das gegenüberliegende Ende des Kolben-Zylinder-Aggregates greift beispielsweise am Haltekörper 80 an.

Der Rahmen 84 umfasst ferner ein Paar von Strukturelementen 134, die an beiden Vorratsbehältern 116, 118 angreifen. Zwischen den in der Querrichtung 40 im Abstand zueinander angeordneten Strukturelementen 134 ist das Kolben-Zylinder-Aggregat der Verstelleinrichtung 74 angeordnet (Figur 1). Das Kolben-Zylinder-Aggregat koppelt mit einem jeweiligen freien Ende 136 der Strukturelemente 134. Das gegenüberliegende Ende des Kolben-Zylinder-Aggregates koppelt mit der Trageinrichtung 14.

Die Kräfte zum Verschieben der Halteeinrichtung 68 sowie zum Absenken und Anheben der Injektionselemente 32 können auf diese Weise zur Erzielung einer kompakten Bauform an den Vorratsbehältern 116, 118 angreifen.

Der Vorratsbehälter 116 weist vorliegend zwei Fluideinlässe 138 und Fluidauslässe 140 auf, deren Anzahl der Anzahl der angeschlossenen Injektionselemente 32 entspricht, vorliegend sieben Stück.

Die Fluideinlässe 138 sind in der Querrichtung 40 außenseitig am Vorratsbehälter 116 gebildet, und dazwischen liegen die Fluidauslässe 140. Einlässe 138 und Auslässe 140 sind obenseitig am Vorratsbehälter 116 angeordnet und können dadurch nach dem Öffnen der Verkleidung 22 vom Benutzer auf einfache Weise erreicht werden. Die Einlässe 138 und Auslässe 140 sind äquidistant zueinander am Vorratsbehälter 116 angeordnet.

Der Druckluftkompressor 112 steht im vorliegenden Fall über zwei Zufuhrleitungen 142 mit dem Vorratsbehälter 116 und dem Vorratsbehälter 118 in Fluidverbindung, die parallel an den Druckluftkompressor 112 angeschlossen sind (Figur 2). Die geförderte Druckluft wird beiden Vorratsbehältern 116, 118 über die Zufuhrleitungen 142 zugeführt und befüllt diese. Es kann vorgesehen sein, dass beide Zufuhrleitungen 142 verzweigte Abschnitte nur einer Zufuhrleitung sind.

Alternativ können unterschiedliche Zufuhrleitungen für die Vorratsbehälter 116, 118 vorgesehen sein. Denkbar ist auch, dass an jeden Vorratsbehälter nur eine Zufuhrleitung angeschlossen ist.

Es kann vorgesehen sein, dass in den Zufuhrleitungen 142, am Druckluftkompressor 112 oder an den Vorratsbehältern 116, 118 insbesondere von der Steuereinrichtung 60 ansteuerbare Ventile angeordnet sind, um die Zufuhrleitungen 142 wahlweise freizugeben oder zu sperren. Alternativ oder ergänzend ist beispielsweise der Einsatz eines Rückschlagventils in der jeweiligen Zufuhrleitung 142 denkbar. Figur 2 zeigt schematisch gestrichelt ein Ventil 145 in den Zufuhrleitungen 142. Es kann alternativ eine ventillose Verbindung vorgesehen sein.

Die bereitgestellte Luft kann in den Vorratsbehältern 116 zwischengespeichert werden. Durch die Anordnung der Fluidauslässe 138 außenseitig und den Fluideinlässen 140 dazwischen bildet sich eine bevorzugte Strömung von Druckluft im Vorratsbehälter 116 so aus, dass dieser rasch bis zu den Fluidauslässen 140 befüllt wird.

Die Fluidauslässe 140 stehen über eine jeweilige Fluidleitung 144 mit den Fluideinlässen 62 der Fluidbehälter 58 in Strömungsverbindung. Es kann vorgesehen sein, dass ein insbesondere von der Steuereinrichtung 60 ansteuerbares Ventil in die Fluidleitung 144 geschaltet ist oder an einem der Behälter 58, 116, 118 angeordnet ist. Alternativ oder ergänzend ist beispielsweise der Einsatz eines jeweiligen Rückschlagventils denkbar. Figur 2 zeigt schematisch gestrichelt ein Ventil 146 in einer Fluidleitung 144. Alternativ kann eine ventillose Verbindung vorgesehen sein.

Die in den Vorratsbehältern 116, 118 zwischengespeicherte Druckluft kann den Fluidbehältern 58 über die Fluidleitungen 144 zugeführt und darin bevorratet werden. Durch Freigabe der Auslassventile 56 mittels der Steuerungseinrichtung 60 kann gezielt Druckluft in den Boden 12 injiziert werden. Für eine gleichmäßige Beaufschlagung des Bodens 12 ist neben der identischen Ausgestaltung der Injektionseinheiten 42 eine gleiche oder im Wesentlichen gleiche Länge der Fluidleitungen 144 von Vorteil.

### Bezugszeichenliste:

- 10: Bodenbehandlungsvorrichtung
- 12: Boden
- 14: Trageinrichtung
- 16: Längsträger
- 18: Querträger
- 20: Tragrahmen
- 22: Verkleidung
- 24: Vorderseite
- 26: Kupplungseinrichtung
- 28: Antriebswelle
- 30: Fluidbereitstellungseinrichtung
- 32: Injektionselement
- 34: Auflageeinrichtung
- 36: Auflageeinrichtung
- 38: Bearbeitungsrichtung
- 40: Querrichtung
- 42: Injektionseinheit
- 44: Fixierteil
- 46: Anlageelement
- 48: Gehäuse
- 50: erster Abschnitt
- 52: zweiter Abschnitt
- 54: Verschraubung
- 56: Auslassventil
- 58: Fluidbehälter
- 60: Steuereinrichtung
- 62: Fluideinlass
- 64: Stützelement
- 66: elastisches Element
- 68: Halteeinrichtung
- 70: Koppelteil
- 72: Halteteil
- 74: Verstelleinrichtung
- 76: Hubeinrichtung
- 78: Hydraulikmotor
- 80: Haltekörper
- 82: Auflagekörper
- 84: Rahmen
- 86: Strukturelement
- 88: Führungselement
- 90: Rolle
- 92: Strukturelement
- 94: Seitenteil
- 96: Auflageelement
- 98: Rolle
- 100: Führungselement
- 104: Strukturelement
- 106: Strukturelement
- 108: Strukturelement
- 110: Strukturelement
- 112: Druckluftkompressor
- 116: Vorratsbehälter
- 118: Vorratsbehälter
- 120: Hohlprofil
- 122: Wand
- 124: Fluidraum
- 126: Durchgangsöffnung
- 128: Rand
- 130: Abdeckelement
- 132: Strukturelement
- 134: Strukturelement
- 136: freies Ende
- 138: Fluideinlass
- 140: Fluidauslass
- 142: Zufuhrleitung
- 144: Fluidleitung
- 145: Ventil
- 146: Ventil

## Patentansprüche

1. Bodenbehandlungsvorrichtung zur Bodenlockerung, insbesondere bei Böden mit Rasenbewuchs, umfassend eine Trageinrichtung (14) und eine daran beweglich gehaltene Halteeinrichtung (68), an der eine Mehrzahl von Injektionselementen (32) gehalten ist, eine Hubeinrichtung (76), über die die Injektionselemente (32) in den Boden (12) einführbar und aus diesem herausziehbar sind, und eine Fluidbereitstellungseinrichtung (30), die mindestens einen Vorratsbehälter (116, 118) für Fluid umfasst, der mit Fluid zum Zwischenspeichern beaufschlagbar ist und der mit mehreren Injektionselementen (32) direkt oder indirekt in Fluidverbindung steht, wobei die Trageinrichtung (14) und/oder die Halteeinrichtung (68) mindestens einen Rahmen (84) aus miteinander verbundenen Strukturelementen (86, 92, 104, 106, 108, 110, 132, 134) umfasst, **dadurch gekennzeichnet, dass** der mindestens eine Vorratsbehälter (116, 118) ein Strukturelement (108, 110) des Rahmens (84) ausbildet und dass der Vorratsbehälter (116, 118) zwei weitere, im Abstand zueinander angeordnete Strukturelemente (92) des Rahmens (84) miteinander verbindet und jeweilige Durchgangsöffnungen (126) der weiteren Strukturelemente (84) durchgreift.

2. Bodenbehandlungsvorrichtung nach Anspruch 1, **dadurch gekennzeichnet, dass** die Halteeinrichtung (68) ein Koppelteil (70) aufweist und ein Halteteil (72), wobei die Halteeinrichtung (68) über das Koppelteil (70) an der Trageinrichtung (14) gehalten ist und die Injektionselemente (32) am Halteteil (72) gehalten sind, und dass das Halteteil (72) relativ zum Koppelteil (70) über die Hubeinrichtung (76) anhebbar und absenkbar ist, vorzugsweise dass das Koppelteil (70) den Rahmen (84) umfasst oder ausbildet oder das Halteteil (72) den Rahmen (84) umfasst oder ausbildet.

3. Bodenbehandlungsvorrichtung nach Anspruch 1 oder 2, **dadurch gekennzeichnet, dass** die Bodenbehandlungsvorrichtung (10) eine Verstelleinrichtung (74) umfasst, über die das Koppelteil (70) relativ zur Trageinrichtung (14) längs einer Bearbeitungsrichtung (38) der Bodenbehandlungsvorrichtung (10) beweglich und insbesondere verschiebbar ist.

4. Bodenbehandlungsvorrichtung nach Anspruch 2 oder 3, **dadurch gekennzeichnet, dass** der Rahmen (84) Strukturelemente (86) umfasst, die Führungselemente (88) für das relativ zum Koppelteil (70) verschiebliche Halteteil (72) ausbilden.

5. Bodenbehandlungsvorrichtung nach Anspruch 3 oder 4, **dadurch gekennzeichnet, dass** die Verstelleinrichtung (74) mit dem mindestens einen Vorratsbehälter (116, 118) und der Trageinrichtung (14) gekoppelt ist, vorzugsweise dass die Verstelleinrichtung (74) bei zwei oder mehr Vorratsbehältern (116, 118) über ein Strukturelement (132) des Rahmens (84) mit zumindest zwei Vorratsbehältern (116, 118) gekoppelt ist.

6. Bodenbehandlungsvorrichtung nach einem der Ansprüche 2 bis 5, **dadurch gekennzeichnet, dass** die Hubeinrichtung (76) mit dem mindestens einen Vorratsbehälter (116, 118) und dem Halteteil (72) gekoppelt ist, vorzugsweise dass die Hubeinrichtung (76) bei zwei oder mehr Vorratsbehältern (116, 118) über ein Strukturelement (134) des Rahmens (84) mit zumindest zwei Vorratsbehältern (116, 118) gekoppelt ist.

7. Bodenbehandlungsvorrichtung nach einem der voranstehenden Ansprüche, **dadurch gekennzeichnet, dass** zumindest eines der Folgenden gilt:
- der mindestens eine Vorratsbehälter (116, 118) ist in einer Querrichtung (40) der Bodenbehandlungsvorrichtung (10) und/oder horizontal ausgerichtet;
- der mindestens eine Vorratsbehälter (116, 118) ist aus Metall gefertigt.

8. Bodenbehandlungsvorrichtung nach einem der voranstehenden Ansprüche, **dadurch gekennzeichnet, dass** zumindest eines der Folgenden gilt:
- der mindestens eine Vorratsbehälter (116, 118) ist ein Hohlprofil (120) oder umfasst ein Hohlprofil (120), wobei insbesondere am Hohlprofil (120) vorzugsweise endseitig Abdeckelemente (130) angeordnet sind oder das Hohlprofil (120) Abdeckelemente (130) umfasst, über die ein Fluidraum des Vorratsbehälters (116, 118) verschlossen ist;
- der Vorratsbehälter (116, 118), insbesondere das Hohlprofil (120), weist einen runden und vorzugsweise kreisrunden Querschnitt auf;
- der mindestens eine Vorratsbehälter (116, 118), insbesondere das Hohlprofil (120), ist einwandig ausgestaltet.

9. Bodenbehandlungsvorrichtung nach einem der voranstehenden Ansprüche, **dadurch gekennzeichnet, dass** zumindest eines der Folgenden gilt:
- der mindestens eine Vorratsbehälter (116, 118) verbindet Seitenteile (94) des Rahmens (84) miteinander, wobei die Seitenteile (94) vorzugsweise plattenförmig oder im Wesentlichen plattenförmig ausgestaltet sind;
- der Rahmen (84) umfasst mindestens ein weiteres, parallel zum mindestens einen Vorratsbehälter (116, 118) ausgerichtetes, die Seitenteile (94) verbindendes Strukturelement (104, 106, 108, 110), wobei vorzugsweise ein weiterer die Seitenteile (94) miteinander verbindender Vorratsbehälter (116, 118) vorgesehen ist.

10. Bodenbehandlungsvorrichtung nach einem der voranstehenden Ansprüche, **dadurch gekennzeichnet, dass** der Rahmen (84) Auflageelemente (96) umfasst oder bildet zum Aufliegen auf der Trageinrichtung (14), die eine Auflageebene definieren, wobei der mindestens eine Vorratsbehälter (116, 118) oberhalb der Auflageebene angeordnet ist, vorzugsweise dass die Auflageelemente (96) Rollen (98) des relativ zur Trageinrichtung (14) verschieblichen Koppelteils (70) sind, die in Führungselemente (100) der Trageinrichtung (14) eingreifen.

11. Bodenbehandlungsvorrichtung nach einem der voranstehenden Ansprüche, **dadurch gekennzeichnet, dass** die Fluidbereitstellungseinrichtung (30) zwei oder mehr Vorratsbehälter (116, 118) umfasst, die jeweils ein Strukturelement (108, 110) des Rahmens (84) ausbilden, vorzugsweise dass ein jeweiliger Vorratsbehälter (116, 118) mit derselben Anzahl von Injektionselementen (32) fluidverbunden ist.

12. Bodenbehandlungsvorrichtung nach einem der voranstehenden Ansprüche, **dadurch gekennzeichnet, dass** die Fluidbereitstellungseinrichtung (30) ein antreibbares Förderaggregat für Fluid umfasst, insbesondere einen Druckluftkompressor (112), das über mindestens eine Zufuhrleitung (142) mit einem Fluideinlass (138) des mindestens einen Vorratsbehälters (116, 118) fluidverbunden ist, und/oder dass Fluidleitungen (144) zum Verbinden des mindestens einen Vorratsbehälters (116, 118) mit den Injektionselementen (32) gleich lang oder im Wesentlichen gleich lang sind.

13. Bodenbehandlungsvorrichtung nach Anspruch 12, **dadurch gekennzeichnet, dass** zumindest eines der Folgenden gilt:
- zwei oder mehr Vorratsbehälter (116, 118) sind über die mindestens eine Zufuhrleitung (142) parallel an das Förderaggregat oder über unterschiedliche Zufuhrleitungen (142) an das Förderaggregat angeschlossen;
- der mindestens eine Vorratsbehälter (116, 118) weist zwei oder mehr Fluideinlässe (138) auf, an die jeweils eine Zufuhrleitung (142) angeschlossen ist, wobei vorzugsweise Fluidauslässe (140) des mindestens einen Vorratsbehälters (116, 118), an die Fluidleitungen (144) zur Fluidverbindung mit den Injektionselementen (32) angeschlossen sind, zwischen den Fluideinlässen (138) angeordnet sind, oder wobei zwischen den Fluideinlässen (138) kein Fluidauslass (140) angeordnet ist und jeweils die Hälfte der Fluidauslässe (140) einem Fluideinlass (138) zugeordnet ist und an der dem jeweils anderen Fluideinlass (138) abgewandten Seite des Fluideinlasses (138) angeordnet ist;
- der mindestens eine Fluideinlass (138) und Fluidauslässe (140) sind äquidistant zueinander am mindestens einen Vorratsbehälter (116, 118) angeordnet;
- der mindestens eine Fluideinlass (138) und Fluidauslässe (140) sind obenseitig am mindestens einen Vorratsbehälter (116, 118) angeordnet.

14. Bodenbehandlungsvorrichtung nach einem der voranstehenden Ansprüche, **gekennzeichnet durch**
- ein Verhältnis einer Länge zu einem Durchmesser des mindestens einen Vorratsbehälters (116, 118) von ungefähr 10:1 bis 30:1, bevorzugt ungefähr 15:1 bis 25:1; und/oder
- ein Volumen des mindestens einen Vorratsbehälters (116, 118) von ungefähr 5 I bis 15 I, vorzugsweise ungefähr 8 I bis 12 I.

15. Bodenbehandlungsvorrichtung nach einem der voranstehenden Ansprüche, **dadurch gekennzeichnet, dass** den Injektionselementen (32) jeweilige Fluidbehälter (58) zugeordnet sind und über ein jeweiliges, von einer Steuereinrichtung (60) der Bodenbehandlungsvorrichtung (10) ansteuerbares Auslassventil (56) wahlweise mit diesen in Fluidverbindung bringbar sind, wobei der mindestens eine Vorratsbehälter (116, 118) über Fluidleitungen (144) mit den Fluidbehältern (58) strömungsverbunden ist, vorzugsweise dass ein Verhältnis eines Volumenanteils des gleichmäßig auf die Anzahl der Injektionselemente (32) verteilten Volumens des mindestens einen Vorratsbehälters (116, 118) zum Volumen des Fluidbehälters ungefähr 1 bis 4 beträgt, vorzugsweise ungefähr 2 bis 3.

## Claims

1. Ground treatment apparatus for loosening the ground, in particular in the case of ground with grass growth, comprising a support device (14) and a holding device (68) that is movably held thereon, on which a plurality of injection elements (32) are held, a lifting device (76), by way of which the injection elements (32) are insertable into the ground (12) and are extractable therefrom, and a fluid provisioning device (30) that comprises at least one reservoir (116, 118) for fluid, which can be supplied with fluid for intermediate storage and which is directly or indirectly in fluidic connection with a plurality of injection elements (32), wherein the support device (14) and/or the holding device (68) comprise(s) at least one frame (84) made of interconnected structural elements (86, 92, 104, 106, 108, 110, 132, 134), wherein the at least one reservoir (116, 118) forms a structural element (108, 110) of the frame (84) and the reservoir (116, 118) connects two further structural elements (92) of the frame (84) arranged at a distance from one another and passes through respective through-openings (126) of the further structural elements (84).

2. Ground treatment apparatus in accordance with Claim 1, **characterized in that** the holding device (68) has a coupling part (70) and a holding part (72), wherein the holding device (68) is held on the support device (14) by way of the coupling part (70) and the injection elements (32) are held on the holding part (72), and **in that** the holding part (72) is raisable and lowerable relative to the coupling part (70) by way of the lifting device (76), preferably **in that** the coupling part (70) comprises or forms the frame (84), or the holding part (72) comprises or forms the frame (84).

3. Ground treatment apparatus in accordance with Claim 1 or 2, **characterized in that** the ground treatment apparatus (10) comprises an adjustment device (74) by way of which the coupling part (70) is moveable and, in particular, displaceable relative to the support device (14) along a working direction (38) of the ground treatment apparatus (10).

4. Ground treatment apparatus in accordance with Claim 2 or 3, **characterized in that** the frame (84) comprises structural elements (86), which form guide elements (88) for the holding part (72) that is displaceable relative to the coupling part (70).

5. Ground treatment apparatus in accordance with Claim 3 or 4, **characterized in that** the adjustment device (74) is coupled to the at least one reservoir (116, 118) and the support device (14), preferably **in that** the adjustment device (74), in the case of two or more reservoirs (116, 118), is coupled to at least two reservoirs (116, 118) by way of a structural element (132) of the frame (84).

6. Ground treatment apparatus in accordance with any one of Claims 2 to 5, **characterized in that** the lifting device (76) is coupled to the at least one reservoir (116, 118) and the holding part (72), preferably **in that** the lifting device (76), in the case of two or more reservoirs (116, 118), is coupled to at least two reservoirs (116, 118) by way of a structural element (134) of the frame (84).

7. Ground treatment apparatus in accordance with any one of the preceding Claims, **characterized in that** at least one of the following applies:
- the at least one reservoir (116, 118) is oriented in a transverse direction (40) of the ground treatment apparatus (10) and/or horizontally;
- the at least one reservoir (116, 118) is made of metal.

8. Ground treatment apparatus in accordance with any one of the preceding Claims, **characterized in that** at least one of the following applies:
- the at least one reservoir (116, 118) is a hollow profile (120) or comprises a hollow profile (120), wherein in particular cover elements (130) are arranged on the hollow profile (120), preferably at its end, or **in that** the hollow profile (120) comprises cover elements (130) by way of which a fluid space of the reservoir (116, 118) is closed;
- the reservoir (116, 118), in particular the hollow profile (120), has a round and preferably circular cross section;
- the at least one reservoir (116, 118), in particular the hollow profile (120), is of single-walled configuration.

9. Ground treatment apparatus in accordance with any one of the preceding Claims, **characterized in that** at least one of the following applies:
- the at least one reservoir (116, 118) connects side parts (94) of the frame (84) to one another, wherein the side parts (94) are preferably of plate-shaped or substantially plate-shaped configuration;
- the frame (84) comprises at least one further structural element (104, 106, 108, 110), which is oriented in parallel to the at least one reservoir (116, 118) and connects the side parts (94), wherein preferably a further reservoir (116, 118) connecting the side parts (94) to one another is provided.

10. Ground treatment apparatus in accordance with any one of the preceding Claims, **characterized in that** the frame (84) comprises or forms bearing elements (96) for bearing on the support device (14), which define a bearing plane, wherein the at least one reservoir (116, 118) is arranged above the bearing plane, preferably the bearing elements (96) are rollers (98) of the coupling part (70) that is displaceable relative to the support device (14), said rollers engaging in guide elements (100) of the support device (14).

11. Ground treatment apparatus in accordance with any one of the preceding Claims, **characterized in that** the fluid provisioning device (30) comprises two or more reservoirs (116, 118), which each form a structural element (108, 110) of the frame (84), preferably a respective reservoir (116, 118) is fluidically connected to the same number of injection elements (32).

12. Ground treatment apparatus in accordance with any one of the preceding Claims, **characterized in that** the fluid provisioning device (30) comprises a drivable conveying assembly for fluid, in particular an air compressor (112), which is fluidically connected to a fluid inlet (138) of the at least one reservoir (116, 118) by way of at least one supply conduit (142), and/or that fluid conduits (144) for connecting the at least one reservoir (116, 118) to the injection elements (32) are of the same length or of substantially the same length.

13. Ground treatment apparatus in accordance with Claim 12, **characterized in that** at least one of the following applies:
- two or more reservoirs (116, 118) are connected in parallel to the conveying assembly by way of the at least one supply conduit (142) or are connected to the conveying assembly by way of different supply conduits (142);
- the at least one reservoir (116, 118) has two or more fluid inlets (138), to which in each case a supply conduit (142) is connected, wherein preferably fluid outlets (140) of the at least one reservoir (116, 118), to which fluid conduits (144) are connected to fluidically connect to the injection elements (32), are arranged between the fluid inlets (138), or wherein no fluid outlet (140) is arranged between the fluid inlets (138) and in each case half of the fluid outlets (140) are associated with a respective fluid inlet (138) and are arranged on the side of the fluid inlet (138) facing away from the respective other fluid inlet (138);
- the at least one fluid inlet (138) and fluid outlets (140) are arranged equidistant to one another on the at least one reservoir (116, 118);
- the at least one fluid inlet (138) and fluid outlets (140) are arranged on the top of the at least one reservoir (116, 118).

14. Ground treatment apparatus in accordance with any one of the preceding Claims, **characterized by**
- a ratio of a length to a diameter of the at least one reservoir (116, 118) of about 10:1 to 30:1, preferably about 15:1 to 25:1; and/or
- a volume of the at least one reservoir (116, 118) of about 5 I to 15 I, preferably about 8 I to 12 I.

15. Ground treatment apparatus in accordance with any one of the preceding Claims, **characterized in that** respective fluid containers (58) are associated with the injection elements (32) and are selectively bringable into fluidic connection therewith by way of a respective outlet valve (56) that is controllable by a control device (60) of the ground treatment apparatus (10), wherein the at least one reservoir (116, 118) is flow-connected to the fluid containers (58) by way of fluid conduits (144), preferably **in that** a ratio of a volume fraction of the volume of the at least one reservoir (116, 118) evenly distributed among the number of injection elements (32) to the volume of the fluid container is about 1 to 4, preferably about 2 to 3.

## Revendications

1. Dispositif de traitement du sol pour l'ameublissement du sol, en particulier pour des sols avec une couverture végétale, comprenant un système de support (14) et un système de retenue (68) retenu mobile sur celui-ci, sur lequel une pluralité d'éléments d'injection (32) est retenue, un système de levage (76), par l'intermédiaire duquel les éléments d'injection (32) peuvent être introduits dans le sol (12) et peuvent en être retirés, et un système de fourniture de fluide (30), qui comprend au moins un réservoir de stockage (116, 118) pour un fluide, qui peut être alimenté en fluide à stocker de manière intermédiaire et qui est directement ou indirectement en liaison fluidique avec plusieurs éléments d'injection (32), dans lequel le système de support (14) et/ou le système de retenue (68) comprend au moins un cadre (84) composé d'éléments structuraux (86, 92, 104, 106, 108, 110, 132, 134) reliés les uns aux autres, **caractérisé en ce que** le au moins un réservoir de stockage (116, 118) forme un élément structural (108, 110) du cadre (84) et que le réservoir de stockage (116, 118) relie l'un à l'autre deux autres éléments structuraux (92) du cadre (84) disposés à distance l'un de l'autre et traverse des ouvertures de passage (126) respectives des autres éléments structuraux (84).

2. Dispositif de traitement du sol selon la revendication 1, **caractérisé en ce que** le système de retenue (68) présente une partie d'accouplement (70) et une partie de retenue (72), dans lequel le système de retenue (68) est retenu sur le système de support (14) par l'intermédiaire de la partie d'accouplement (70) et les éléments d'injection (32) sont retenus sur la partie de retenue (72), et que la partie de retenue (72) peut être levée et baissée par rapport à la partie d'accouplement (70) par l'intermédiaire du système de levage (76), de préférence que la partie d'accouplement (70) comprend ou forme le cadre (84) ou la partie de retenue (72) comprend ou forme le cadre (84).

3. Dispositif de traitement du sol selon la revendication 1 ou 2, **caractérisé en ce que** le dispositif de traitement du sol (10) comprend un système de déplacement (74), par l'intermédiaire duquel la partie d'accouplement (70) est mobile et en particulier peut coulisser par rapport au système de support (14) le long d'une direction de travail (38) du dispositif de traitement du sol (10).

4. Dispositif de traitement du sol selon la revendication 2 ou 3, **caractérisé en ce que** le cadre (84) comprend des éléments structuraux (86), qui réalisent des éléments de guidage (88) pour la partie de retenue (72) coulissante par rapport à la partie d'accouplement (70).

5. Dispositif de traitement du sol selon la revendication 3 ou 4, **caractérisé en ce que** le système de déplacement (74) est accouplé au au moins un réservoir de stockage (116, 118) et au système de support (14), de préférence que le système de déplacement (74) pour deux réservoirs de stockage (116, 118) ou plus est accouplé à au moins deux réservoirs de stockage (116, 118) par l'intermédiaire d'un élément structural (132) du cadre (84).

6. Dispositif de traitement du sol selon l'une quelconque des revendications 2 à 5, **caractérisé en ce que** le système de levage (76) est accouplé au au moins un réservoir de stockage (116, 118) et à la partie de retenue (72), de préférence que le système de levage (76) pour deux réservoirs de stockage (116, 118) ou plus est accouplé à au moins deux réservoirs de stockage (116, 118) par l'intermédiaire d'un élément structural (134) du cadre (84).

7. Dispositif de traitement du sol selon l'une quelconque des revendications précédentes, **caractérisé en ce qu'**au moins un de ce qui suit s'applique :
- le au moins un réservoir de stockage (116, 118) est orienté dans une direction transversale (40) du dispositif de traitement du sol (10) et/ou horizontalement ;
- le au moins un réservoir de stockage (116, 118) est fabriqué à partir de métal.

8. Dispositif de traitement du sol selon l'une quelconque des revendications précédentes, **caractérisé en ce qu'**au moins un de ce qui suit s'applique :
- le au moins un réservoir de stockage (116, 118) est un profilé creux (120) ou comprend un profilé creux (120), dans lequel en particulier des éléments de recouvrement (130) sont disposés sur le profilé creux (120) de préférence côté extrémité ou le profilé creux (120) comprend des éléments de recouvrement (130), par l'intermédiaire desquels une chambre de fluide du réservoir de stockage (116, 118) est fermée ;
- le réservoir de stockage (116, 118), en particulier le profilé creux (120), présente une section transversale ronde et de préférence circulaire ;
- le au moins un réservoir de stockage (116, 118), en particulier le profilé creux (120), est conçu avec une paroi.

9. Dispositif de traitement du sol selon l'une quelconque des revendications précédentes, **caractérisé en ce qu'**au moins un de ce qui suit s'applique :
- le au moins un réservoir de stockage (116, 118) relie les parties latérales (94) du cadre (84) les unes aux autres, dans lequel les parties latérales (94) sont conçues de préférence en forme de plaque ou sensiblement en forme de plaque ;
- le cadre (84) comprend au moins un autre élément structural (104, 106, 108, 110), orienté parallèlement au au moins un réservoir de stockage (116, 118), reliant les parties latérales (94), dans lequel de préférence un autre réservoir de stockage (116, 118) reliant les parties latérales (94) les unes aux autres est prévu.

10. Dispositif de traitement du sol selon l'une quelconque des revendications précédentes, **caractérisé en ce que** le cadre (84) comprend ou forme des éléments d'appui (96) pour l'appui sur le système de support (14), qui définissent un plan d'appui, dans lequel le au moins un réservoir de stockage (116, 118) est disposé au-dessus du plan d'appui, de préférence que les éléments d'appui (96) sont des rouleaux (98) de la partie d'accouplement (70) coulissante par rapport au système de support (14), qui s'insèrent dans des éléments de guidage (100) du système de support (14).

11. Dispositif de traitement du sol selon l'une quelconque des revendications précédentes, **caractérisé en ce que** le système de fourniture de fluide (30) comprend deux réservoirs de stockage (116, 118) ou plus, qui réalisent respectivement un élément structural (108, 110) du cadre (84), de préférence qu'un réservoir de stockage (116, 118) respectif est en liaison fluidique avec le même nombre d'éléments d'injection (32).

12. Dispositif de traitement du sol selon l'une quelconque des revendications précédentes, **caractérisé en ce que** le système de fourniture de fluide (30) comprend un groupe de transport pouvant être entraîné pour le fluide, en particulier un compresseur à air comprimé (112), qui est en liaison fluidique avec une entrée de fluide (138) du au moins un réservoir de stockage (116, 118) par l'intermédiaire d'au moins une conduite d'amenée (142), et/ou que les conduites de fluide (144) pour la liaison du au moins un réservoir de stockage (116, 118) aux éléments d'injection (32) sont de même longueur ou sensiblement de même longueur.

13. Dispositif de traitement du sol selon la revendication 12, **caractérisé en ce qu'**au moins un de ce qui suit s'applique :
- deux réservoirs de stockage (116, 118) ou plus sont raccordés parallèlement au groupe de transport par l'intermédiaire de la au moins une conduite d'amenée (142) ou au groupe de transport par l'intermédiaire de conduites d'amenée (142) différentes ;
- le au moins un réservoir de stockage (116, 118) présente deux entrées de fluide (138) ou plus, auxquelles respectivement une conduite d'amenée (142) est raccordée, dans lequel de préférence des sorties de fluide (140) du au moins un réservoir de stockage (116, 118), auxquelles les conduites de fluide (144) pour la liaison fluidique aux éléments d'injection (32) sont raccordées, sont disposées entre les entrées de fluide (138), ou dans lequel aucune sortie de fluide (140) n'est disposée entre les entrées de fluide (138) et respectivement la moitié des sorties de fluide (140) est associée à une entrée de fluide (138) et est disposée sur le côté de l'entrée de fluide (138) opposé à la respectivement autre entrée de fluide (138) ;
- la au moins une entrée de fluide (138) et les sorties de fluide (140) sont disposées sur le au moins un réservoir de stockage (116, 118) à équidistance les unes des autres ;
- la au moins une entrée de fluide (138) et les sorties de fluide (140) sont disposées côté supérieur sur le au moins un réservoir de stockage (116, 118).

14. Dispositif de traitement du sol selon l'une quelconque des revendications précédentes, **caractérisé par**
- un rapport d'une longueur sur un diamètre du au moins un réservoir de stockage (116, 118) d'environ 10/1 à 30/1, de préférence d'environ 15/1 à 25/1 ; et/ou
- un volume du au moins un réservoir de stockage (116, 118) d'environ 5 l à 15 l, de préférence d'environ 8 l à 12 l.

15. Dispositif de traitement du sol selon l'une quelconque des revendications précédentes, **caractérisé en ce que** des réservoirs de fluide (58) respectifs sont associés aux éléments d'injection (32) et peuvent être amenés sélectivement en liaison fluidique avec ceux-ci par l'intermédiaire d'une soupape de sortie (56) respective, pouvant être commandée par un système de commande (60) du dispositif de traitement du sol (10), dans lequel le au moins un réservoir de stockage (116, 118) est en liaison d'écoulement avec les réservoirs de fluide (58) par l'intermédiaire de conduites de fluide (144), de préférence qu'un rapport d'un pourcentage volumique du volume du au moins un réservoir de stockage (116, 118) réparti régulièrement sur le nombre d'éléments d'injection (32) sur le volume du réservoir de fluide atteint environ 1 à 4, de préférence environ 2 à 3.
